# EUROPEAN PATENT APPLICATION

(11) **EP 4 697 685 A1**
(43) Date of publication of application: **18.02.2026**
(21) Application number: 24867309.7
(22) Date of filing: 05.09.2024
(51) Int. Cl.: H04M 1/02

(54) **FOLDABLE ELECTRONIC DEVICE**

(30) Priority: 22.09.2023 CN 202311251138
(71) Applicant: Huawei Technologies Co., Ltd., Shenzhen, Guangdong 518129 (CN)
(72) Inventor: DAI, Qifeng, Shenzhen, Guangdong 518129 (CN); LUO, Yuchen, Shenzhen, Guangdong 518129 (CN)
(74) Representative: Pfenning, Meinig & Partner mbB
(86) International application number: PCT/CN2024/117185
(87) International publication number: WO 2025/060897

(57) **Abstract**

An embodiment of this application provides a foldable electronic device. The foldable electronic device includes a main board, a sub-board, a processor, a first switch assembly, a first signal line, a first module, and a second module. The main board and the sub-board are connected through a hinge. The first module and the second module operate in a mutually exclusive manner. The processor is located on the main board. The first module and the second module are located on the sub-board. The first switch assembly is connected between the processor and the first module through the first signal line to form a first branch. The first switch assembly is connected between the processor and the second module through the first signal line to form a second branch. The first signal line is located in the hinge. The first switch assembly is configured to conduct the first branch or the second branch. Based on the technical solutions of this application, the switch assembly is disposed to switch between the branches between the processor and the modules that operate in the mutually exclusive manner to reuse the cross-hinge signal line, thereby reducing a quantity of lines during wiring and a wiring area, avoiding a resource waste, and reducing difficulty in designing the hinge.

## Description

### CROSS-REFERENCE TO RELATED APPLICATIONS

This application claims priority to Chinese Patent Application No. 202311251138.4, filed with the China National Intellectual Property Administration on September 22, 2023 and entitled "FOLDABLE ELECTRONIC DEVICE", which is incorporated herein by reference in its entirety.

### TECHNICAL FIELD

This application relates to the field of terminal devices, and in particular, to a foldable electronic device.

### BACKGROUND

To make full use of space, a foldable electronic device usually has circuit boards on both sides of a hinge. Usually, a circuit board on which a system on chip (system on chip, SOC) is disposed is referred to as a main board, and a circuit board on the other side of the hinge is referred to as a sub-board. Communication signals between the sub-board and the main board need to cross the hinge through a soft material such as a flexible printed circuit (flexible printed circuit, FPC).

In hardware design, compared with conventional signals, high-speed signals require more cross-hinge signal lines and a larger FPC width due to higher requirements in aspects such as a reference plane, shielding, and transmission lines.

In addition, more board-to-board (board to board, BTB) connectors need to be fastened as the cross-hinge signal lines increase, occupying a larger board layout area, resulting in low space utilization on an extension frame side and affecting an overall size of the device.

Therefore, how to reduce a quantity of cross-hinge signal lines and reduce a circuit board area occupied by the cross-hinge signal lines is currently a problem to be urgently resolved.

### SUMMARY

An embodiment of this application provides a foldable electronic device, to resolve problems of an excessively large quantity of cross-hinge signal lines in the foldable electronic device and an excessively large circuit board area occupied by the cross-hinge signal lines.

An embodiment of this application provides a foldable electronic device. The foldable electronic device includes a main board, a sub-board, a processor, a first switch assembly, a first signal line, a first module, and a second module. The main board and the sub-board are connected through a hinge. The first module and the second module operate in a mutually exclusive manner. The processor is located on the main board. The first module and the second module are located on the sub-board.

The first switch assembly is connected between the processor and the first module through the first signal line to form a first branch. The first switch assembly is connected between the processor and the second module through the first signal line to form a second branch. The first signal line is located in the hinge.

The first switch assembly is configured to conduct the first branch or the second branch.

Based on the technical solution in this embodiment of this application, the switch assembly is disposed to switch between the branches between the processor and the modules that operate in the mutually exclusive manner to reuse the first signal line, thereby reducing a quantity of lines during wiring and a wiring area and avoiding a resource waste due to idleness of the cross-hinge signal line.

In a possible design, the first module is a first image capture module, the second module is a first display module, and the first image capture module and the first display module are respectively used for different types of screens of the foldable electronic device.

It should be noted that, based on an application scenario of the foldable electronic device, for example, a folded state, a hovering state, or an unfolded state of a mobile phone, it may be determined that a display module on an internal screen and an image capture module on an external screen generally operate in the mutually exclusive manner, and an image capture module on the internal screen and a display module on the external screen operate in the mutually exclusive manner. Therefore, the display module and the image capture module that are applied to different screens may be controlled to reuse the same signal line based on the feature that the display module and the image capture module applied to different screens operate in the mutually exclusive manner, thereby reducing a quantity of signal lines without affecting user experience.

In a possible design, the types of the screens of the foldable electronic device include an external screen and an internal screen.

In a possible design, the first switch assembly includes a first switch and a second switch, the first switch is located on the main board, and the second switch is located on the sub-board.

A first switching end of the first switch is connected to a first image capture serial interface of the processor, a wiring end of the first switch is connected to a wiring end of the second switch through the first signal line, and a first switching end of the second switch is connected to the first image capture module, to form the first branch.

A second switching end of the first switch is connected to a first display serial interface of the processor, the wiring end of the first switch is connected to the wiring end of the second switch through the first signal line, and a second switching end of the second switch is connected to the first display module, to form the second branch.

In the technical solution of this design, high-speed switches (namely, the first switch and the second switch) are respectively disposed on a main board side and a sub-board side of the foldable electronic device. The high-speed switch may be applied to a high-speed signal transmission scenario, to switch to a branch needed for a user operation in response to a requirement for the user operation. Because the switch is switched to any module and data is transmitted through the same signal line, in this design, the quantity of signal lines is reduced as much as possible, thereby resolving problems of an excessively large quantity of cross-hinge signal lines and an excessively large area occupied by the signal lines.

In a possible design, the foldable electronic device further includes a second image capture module, and the first image capture module and the second image capture module are respectively used for different types of screens of the foldable electronic device.

The second image capture module is located on the main board, and the second image capture module is connected to the processor.

It may be understood that, in the design solution, if the second image capture module does not participate in branch switching, an installation position of the second image capture module is more flexible. Therefore, in this design, the second image capture module may be disposed on the main board and directly connected to the processor, so that no cross-hinge signal line is needed to connect the second image capture module to the processor, thereby improving signal transmission accuracy.

In a possible design, the foldable electronic device further includes a second switch assembly, a second signal line, a second image capture module, and a second display module. The first image capture module and the second image capture module are respectively used for different types of screens of the foldable electronic device. The first display module and the second display module are respectively used for different types of screens of the foldable electronic device. The second image capture module and the second display module are located on the sub-board.

The second switch assembly is connected between the processor and the second image capture module through the second signal line to form a third branch, and the second switch assembly is connected between the processor and the second display module through the second signal line to form a fourth branch.

The second switch assembly is configured to conduct the third branch or the fourth branch.

It should be noted that, based on an application scenario of the foldable electronic device, for example, a folded state, a hovering state, or an unfolded state of a mobile phone, it may be determined that a display module on an internal screen and an image capture module on an external screen generally operate in the mutually exclusive manner, and an image capture module on the internal screen and a display module on the external screen operate in the mutually exclusive manner.

Therefore, on the basis that the first image capture module and the first display module operate in the mutually exclusive manner and the first switch assembly is added to switch between the branches to implement signal line reuse, in this design, the second switch assembly may be further added, so that the second image capture module and the second display module that operate in the mutually exclusive manner reuse the signal line, thereby further reducing the quantity of cross-hinge signal lines.

In a possible design, the second switch assembly includes a third switch and a fourth switch, the third switch is located on the main board, and the fourth switch is located on the sub-board.

A first switching end of the third switch is connected to a second image capture serial interface of the processor, a wiring end of the third switch is connected to a wiring end of the fourth switch through the second signal line, and a first switching end of the fourth switch is connected to the second image capture module, to form the third branch.

A second switching end of the third switch is connected to a second display serial interface of the processor, the wiring end of the third switch is connected to the wiring end of the fourth switch through the second signal line, and a second switching end of the fourth switch is connected to the second display module, to form the fourth branch.

In the technical solution of this design, high-speed switches (namely, the third switch and the fourth switch) are respectively disposed on the main board side and the sub-board side of the foldable electronic device. The high-speed switch switches to a branch needed for a user operation in response to a requirement for the user operation. Because the switch is switched to any module and data is transmitted through the same signal line, in this design, the quantity of signal lines is reduced as much as possible, thereby resolving problems of an excessively large quantity of cross-hinge signal lines and an excessively large area occupied by the signal lines.

In a possible design, the foldable electronic device further includes a flexible printed circuit board FPC, the FPC is connected between the main board and the sub-board, and the FPC is configured for arrangement of the first signal line and the second signal line.

In the technical solution of this design, the FPC is made of flexible insulation base materials in comparison with a printed circuit board PCB, and can be bent and wound, thereby better satisfying a requirement for the foldable electronic device.

In a possible design, the foldable electronic device further includes board-to-board BTB connectors that are disposed corresponding to the first switch assembly and the second switch assembly, and the BTB connectors are configured to connect to the FPC.

It may be understood that the BTB connector needs to be fastened for connecting each cross-hinge signal line to the FPC. Therefore, a quantity of BTB connectors may also be reduced by reducing the quantity of cross-hinge signal lines.

### BRIEF DESCRIPTION OF DRAWINGS

FIG. 1 is a diagram of an appearance of a foldable electronic device;
FIG. 2 is a diagram of a system architecture of a foldable electronic device;
FIG. 3 is a diagram of a layout of cross-hinge signal lines of a foldable electronic device;
FIG. 4 is a diagram of a structure of a foldable electronic device according to an embodiment of this application;
FIG. 5 is a diagram of a structure of another foldable electronic device according to an embodiment of this application;
FIG. 6 is a diagram of a structure of still another foldable electronic device according to an embodiment of this application;
FIG. 7a is a diagram of a structure of yet another foldable electronic device according to an embodiment of this application;
FIG. 7b is a diagram of a structure of still yet another foldable electronic device according to an embodiment of this application;
FIG. 8a is a diagram of a structure of a further foldable electronic device according to an embodiment of this application; and
FIG. 8b is a diagram of a structure of a still further foldable electronic device according to an embodiment of this application.

### DESCRIPTION OF EMBODIMENTS

To make the objectives, technical solutions, and advantages of this application clearer, the following further describes this application in detail with reference to the accompanying drawings.

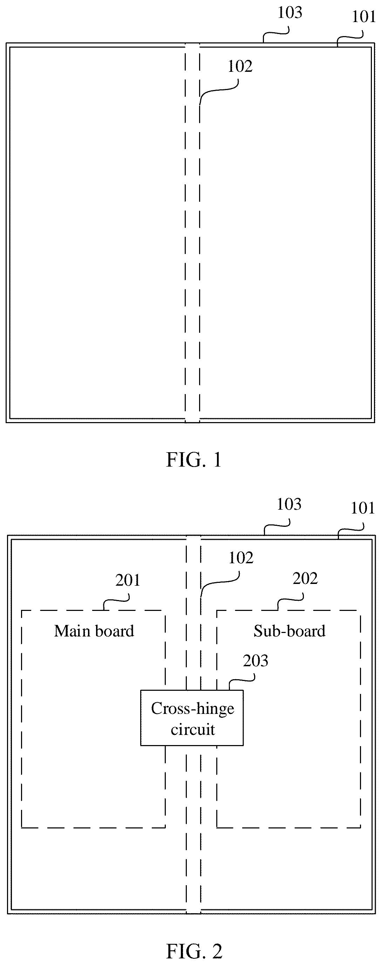

FIG. 1 shows an appearance of a conventional foldable electronic device. A framework of the appearance of the foldable electronic device generally includes a screen 101, a hinge 102, and a middle frame 103.

FIG. 2 shows a system architecture of a conventional foldable electronic device based on FIG. 1. The system architecture of the foldable electronic device generally includes a main board 201, a sub-board 202, and a cross-hinge circuit 203.

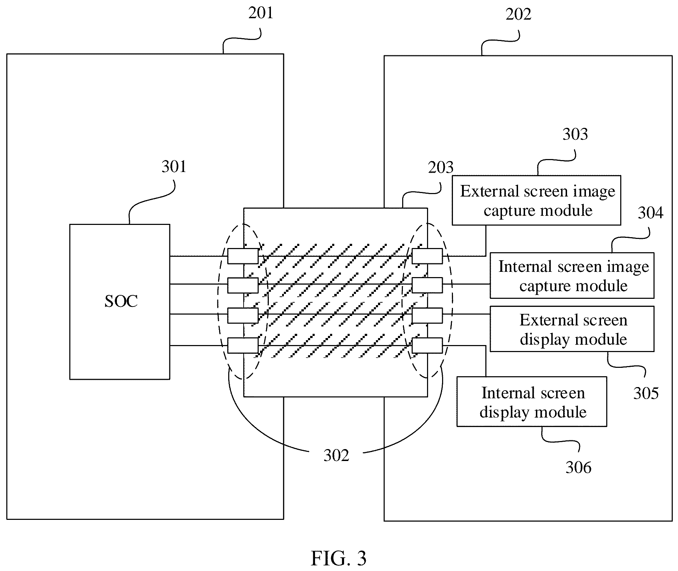

FIG. 3 shows a conventional manner of layout of cross-hinge signal lines based on FIG. 2. An SOC 301 is arranged on the main board 201. Cross-hinge signal lines of the SOC 301 are fastened to connectors 302 on a main board side, and are respectively connected to an external screen image capture module 303, an internal screen image capture module 304, an external screen display module 305, and an internal screen display module 306 on the sub-board 202.

Because various modules of peripherals on the sub-board 202 need to perform data communication with the SOC 301 on the main board 201, a plurality of cross-hinge signal lines and a plurality of pairs of connectors 302 need to be disposed. As a result, there may be up to tens or even hundreds of cross-hinge signal lines in actual application, and consequently a pin design of the cross-hinge circuit 203 is more complex. In addition, high-speed signals have higher requirements in aspects such as a reference plane, shielding, and transmission lines, making it difficult to reduce a quantity of cross-hinge signal lines during actual engineering. Further, a wiring width of the cross-hinge signal line is shown in a shadow part in FIG. 3. It can be learned that the wiring width of the cross-hinge signal line occupies a very large wiring area of the cross-hinge circuit 203.

For the foregoing problems, an embodiment of this application provides a foldable electronic device, to resolve a problem in conventional technologies that there are too many cross-hinge signal lines which occupy an excessively large area.

The following describes a foldable electronic device provided in an example implementation of this application with reference to the foregoing application scenario and the accompanying drawings.

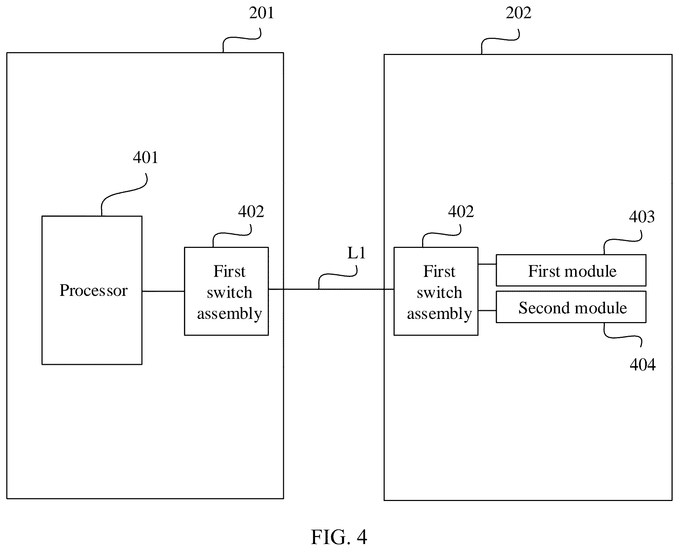

An embodiment of this application provides a foldable electronic device. As shown in FIG. 4, the foldable electronic device includes a main board 201, a sub-board 202, a processor 401, a first switch assembly 402, a first signal line L1, a first module 403, and a second module 404. The main board 201 is connected to the sub-board 202 through a hinge. The first module 403 and the second module 404 operate in a mutually exclusive manner. The processor 401 is located on the main board 201. The first module 403 and the second module 404 are located on the sub-board 202.

The first switch assembly 402 is connected between the processor 401 and the first module 403 through the first signal line L1 to form a first branch. The first switch assembly 402 is connected between the processor and the second module 404 through the first signal line L1 to form a second branch.

The first switch assembly 402 is configured to conduct the first branch or the second branch.

For example, the processor 401 generates a control signal based on a user operation, and the first switch assembly 402 may conduct the first branch or the second branch in response to the control signal from the processor 401.

Based on the technical solution in this embodiment of this application, the switch assembly is disposed to switch between the branches between the modules that operate in the mutually exclusive manner and the processor. The first module 403 and the second module 404 are connected to the processor 401 through the first signal line L1 to reuse the cross-hinge signal line, thereby reducing a quantity of cross-hinge signal lines and a wiring area and avoiding a resource waste due to idleness of the cross-hinge signal line.

The following describes principles of design of the foldable electronic device shown in FIG. 4 with reference to application scenarios.

First, operating statuses of peripheral modules of the foldable electronic device (in Table 1, ✔ indicates that the module is operating, and × indicates that the module does not operate) in a general scenario shown in Table 1 are observed.

**Table 1**

| General scenario | | Peripherals of the sub-board | | | Peripherals of the main board | |
|---|---|---|---|---|---|---|
| | | External screen display module | External screen image capture module | Internal screen display module | Rear image capture module | Internal screen image capture module |
| Folded state | Front photographing | ✔ | ✔ | × | × | × |
| | Rear photographing | ✔ | × | × | ✔ | × |
| Hovering state | Hover photographing | × | × | ✔ | × | ✔ |
| Unfolded state | Front photographing | × | × | ✔ | × | ✔ |
| | Rear photographing | × | × | ✔ | ✔ | × |
| | External screen rear selfie | ✔ | × | × | ✔ | × |

It can be found that in the folded state, the hovering state, or the unfolded state, if a user uses a photographing function, the external screen display module and the internal screen image capture module operate in the mutually exclusive manner.

Then, the operating statuses of the peripheral modules of the foldable electronic device (in Table 2, ✔ indicates that the module is operating, and × indicates that the module does not operate) in a general scenario shown in Table 2 are observed.

**Table 2**

| General scenario | | Peripherals of the sub-board | | | | Peripherals of the main board |
|---|---|---|---|---|---|---|
| | | External screen display module | External screen image capture module | Internal screen display module | Internal screen image capture module | Rear image capture module |
| Folded state | Front photographing | ✔ | ✔ | × | × | × |
| | Rear photographing | ✔ | × | × | × | ✔ |
| Hovering state | Hover photographing | × | × | ✔ | ✔ | × |
| Unfolded state | Front photographing | × | × | ✔ | ✔ | × |
| | Rear photographing | × | × | ✔ | × | ✔ |
| | External screen rear photographing | ✔ | × | × | × | ✔ |

It can be found that in the folded state, the hovering state, or the unfolded state, if the user uses the photographing function, the external screen image capture module and the internal screen display module operate in the mutually exclusive manner.

In conclusion, it can be learned that the internal screen display module and the external screen image capture module generally operate in the mutually exclusive manner, and the internal screen image capture module and the external screen display module generally operate in the mutually exclusive manner.

Therefore, in a possible embodiment, the first module is a first image capture module, the second module is a first display module, and the first image capture module and the first display module are respectively used for different types of screens of the foldable electronic device.

In this embodiment of this application, the display module and the image capture module that are applied to different screens may be controlled to reuse the same switch assembly based on the feature that the display module and the image capture module applied to different screens operate in the mutually exclusive manner, thereby reducing a quantity of signal lines without affecting user experience.

It should be noted that the types of the screens of the foldable electronic device may include an external screen and an internal screen.

The following further describes a structure of the foldable electronic device shown in FIG. 4 in detail with reference to embodiments.

### Embodiment 1

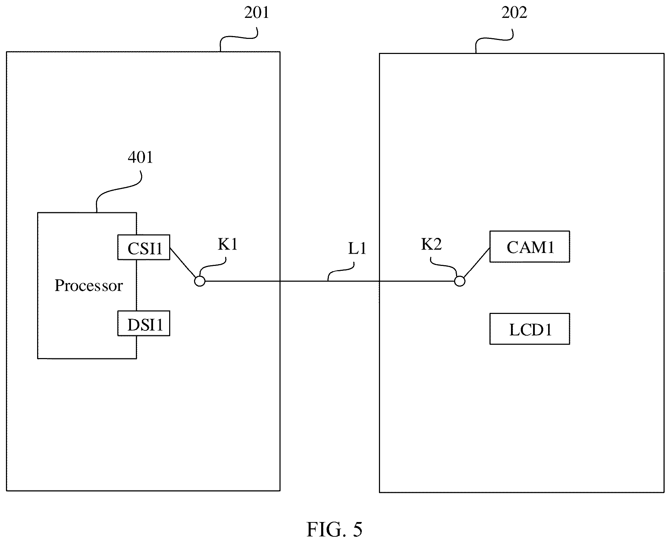

As shown in FIG. 5, a first switch assembly 402 includes a first switch K1 and a second switch K2. The first switch K1 is located on a main board 201, and the second switch K2 is located on a sub-board 202.

A first switching end of the first switch K1 is connected to a first image capture serial interface CSI1 of a processor 401, a wiring end of the first switch K1 is connected to a wiring end of the second switch K2 through a first signal line L1, and a first switching end of the second switch K2 is connected to a first image capture module CAM1, to form a first branch.

A second switching end of the first switch K1 is connected to a first display serial interface DSI1 of the processor 401, the wiring end of the first switch K1 is connected to the wiring end of the second switch K2 through the first signal line L1, and a second switching end of the second switch K2 is connected to a first display module LCD1, to form a second branch.

In actual production, the first switch K1 and the second switch K2 of the foldable electronic device may be high-speed switches. The high-speed switch is configured to switch, in response to a requirement for a user operation, to a branch needed for the user operation to perform signal transmission.

For example, a user uses a front photographing function of a mobile phone in a folded state. In this case, a drive circuit in the mobile phone drives the first switch K1 to perform switching to turn on the first image capture serial interface CSI1, and the drive circuit also drives the second switch K2 to turn on the first image capture module CAM1.

For example, the user uses the front photographing function of the mobile phone in an unfolded state. In this case, the drive circuit in the mobile phone drives the first switch K1 to perform switching to turn on the first display serial interface DSI1, and the drive circuit also drives the second switch K2 to turn on the first display module LCD1.

It can be learned that, in comparison with the conventional manner of layout of the cross-hinge signal lines shown in FIG. 3, in this embodiment of this application, the same cross-hinge signal line is reused for functions of the internal screen display module and the external screen image capture module, to simplify a group of cross-hinge signal lines, so that a width of the cross-hinge circuit can be reduced by 1.0 mm to 1.8 mm in a production process.

The wiring design in this embodiment reduces a quantity of cross-hinge signal lines that are needed to establish the cross-hinge circuit, and has resolved problems of an excessively large quantity of cross-hinge signal lines and an excessively large area occupied by the signal lines.

### Embodiment 2

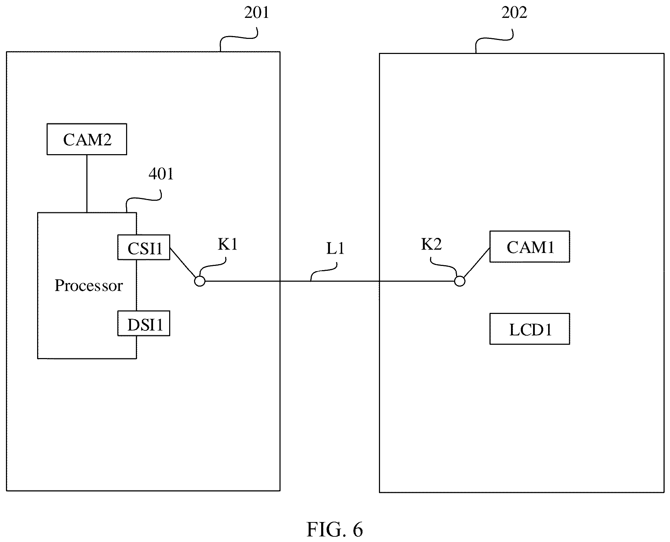

As shown in FIG. 6, the foldable electronic device further includes a second image capture module CAM2. The first image capture module CAM1 and the second image capture module CAM2 are respectively used for different types of screens of the foldable electronic device.

The second image capture module CAM2 is located on the main board 201, and the second image capture module CAM2 is connected to the processor 401.

It may be understood that, in the solution of Embodiment 2, if the second image capture module CAM2 does not participate in a branch switching process of the first switch assembly 402, an installation position of the second image capture module CAM2 is more flexible.

Therefore, in Embodiment 2, the second image capture module CAM2 is disposed on the main board 201 and is directly connected to the processor 401, and no additional cross-hinge signal line is needed to connect the second image capture module CAM2 to the processor 401. In addition, the direct connection manner can improve accuracy of signal transmission.

### Embodiment 3

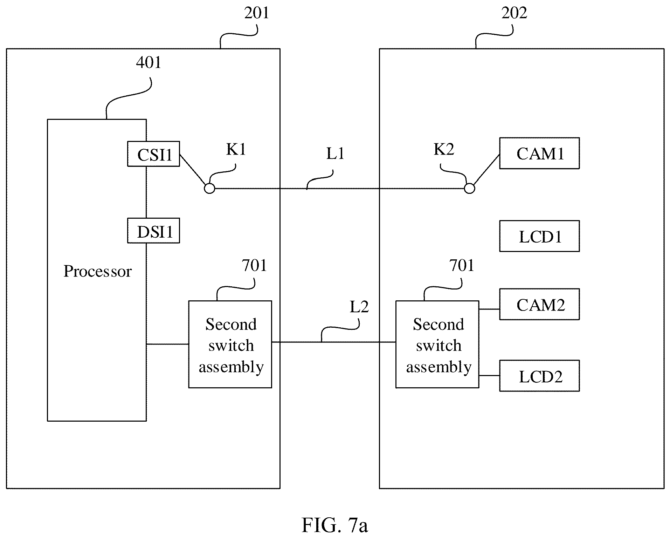

Based on the foldable electronic device shown in FIG. 5, the foldable electronic device further includes a second switch assembly 701, a second signal line L2, a second image capture module CAM2, and a second display module LCD2, as shown in FIG. 7a. The first image capture module CAM1 and the second image capture module CAM2 are respectively used for different types of screens of the foldable electronic device. The first display module LCD1 and the second display module LCD2 are respectively used for different types of screens of the foldable electronic device. The second image capture module CAM2 and the second display module LCD2 are located on the sub-board 202.

The second switch assembly 701 is connected between the processor 401 and the second image capture module CAM2 through the second signal line L2 to form a third branch. The second switch assembly 701 is connected between the processor 401 and the second display module LCD2 through the second signal line L2 to form a fourth branch.

The second switch assembly 701 is configured to conduct the third branch or the fourth branch.

For example, the processor 401 generates a control signal based on a user operation, and the second switch assembly 701 may conduct the third branch or the fourth branch in response to the control signal from the processor 401.

It should be noted that, on the basis that the first image capture module CAM1 and the first display module LCD1 operate in a mutually exclusive manner and the first switch assembly 402 is added in the technical solution of this application to switch between the branches to reuse the cross-hinge signal line, in this embodiment, the second switch assembly 701 may be further added, so that the second image capture module CAM2 and the second display module LCD2 that operate in a mutually exclusive manner reuse the cross-hinge signal line, thereby further reducing the quantity of cross-hinge signal lines.

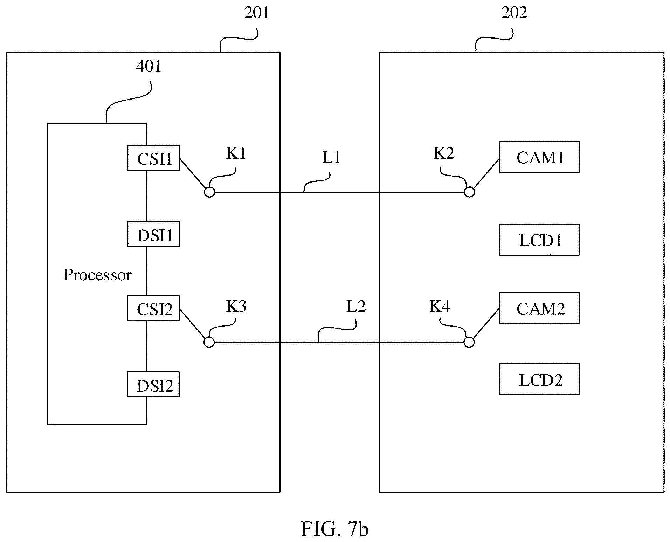

In a possible implementation, as shown in FIG. 7b, the second switch assembly 701 includes a third switch K3 and a fourth switch K4, the third switch K3 is located on the main board 201, and the fourth switch K4 is located on the sub-board 202.

A first switching end of the third switch K3 is connected to a second image capture serial interface CSI2 of the processor 401, a wiring end of the third switch K3 is connected to a wiring end of the fourth switch K4 through the second signal line L2, and a first switching end of the fourth switch K4 is connected to the second image capture module CAM2 to form the third branch.

A second switching end of the third switch K3 is connected to a second display serial interface of the processor 401, the wiring end of the third switch K3 is connected to the wiring end of the fourth switch K4 through the second signal line L2, and a second switching end of the fourth switch K4 is connected to the second display module LCD2 to form the fourth branch.

It should be noted that the third switch K3 and the fourth switch K4 of the foldable electronic device may be high-speed switches. The high-speed switch is configured to switch, in response to a requirement for a user operation, to a branch needed for the user operation to perform signal transmission.

The first image capture module CAM1 and the second image capture module CAM2 of the foldable electronic device may be cameras (cameras), and the first display module LCD1 and the second display module LCD2 may be liquid crystal displays (liquid crystal displays, LCDs).

The first image capture serial interface CSI1 and the second image capture serial interface CSI2 of the processor 401 may be camera serial interfaces (camera serial interfaces, CSIs). The CSI is an interface defined by a mobile terminal interface standardization group (Mobile Industry Processor Interface (Mobile Industry Processor Interface, MIPI) Alliance). The first display module serial interface DSI1 and the second display module serial interface DSI2 of the processor 401 may be display serial interfaces (display serial interfaces, DSIs). The DSI is a serial interface defined by the mobile terminal interface standardization group.

For example, a user uses a front photographing function of a mobile phone in a folded state. In this case, a drive circuit in the mobile phone drives the third switch K3 to perform switching to turn on the second image capture serial interface CSI2, and the drive circuit also drives the fourth switch K4 to turn on the second image capture module CAM1.

For example, the user uses the front photographing function of the mobile phone in an unfolded state. In this case, the drive circuit in the mobile phone drives the third switch K3 to perform switching to turn on the second display serial interface DSI2, and the drive circuit also drives the fourth switch K4 to turn on the second display module LCD2.

It can be learned that, data transmission needs to be performed through the second signal line L2, regardless of whether the third switch K3 is switched to the second image capture serial interface CSI2 or the second display serial interface DSI2, and whether the fourth switch K4 is switched to the second image capture module CAM2 or the second display module LCD2.

Therefore, the wiring layout in this embodiment reduces the quantity of cross-hinge signal lines, and has resolved problems of an excessively large quantity of cross-hinge signal lines and an excessively large area occupied by the cross-hinge signal lines.

In addition, as shown in FIG. 7a and FIG. 7b, the processor 401 in this embodiment is located on the main board 201, and the first image capture module CAM1, the second image capture module CAM2, the first display module LCD1, and the second display module LCD2 are located on the sub-board 202. In this application, the peripheral modules are arranged on the sub-board side, thereby resolving problems of low utilization on the sub-board side and an excessively large overall size of the device.

### Embodiment 4

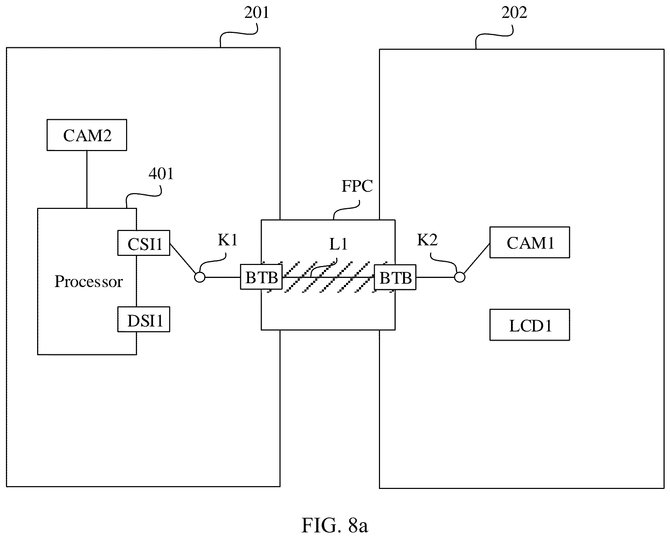

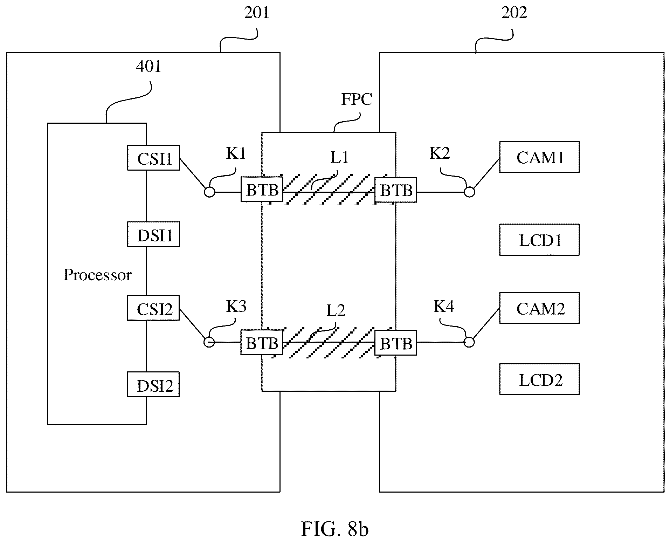

As shown in FIG. 8a and FIG. 8b, the foldable electronic device further includes a flexible printed circuit board FPC. The FPC is connected between the main board 201 and the sub-board 202. The FPC is configured for arrangement of the first signal line L1 and the second signal line L2.

A person skilled in the art should know that, the foldable electronic device may alternatively use a printed circuit board (printed circuit board, PCB) for the layout of wiring. In comparison with the PCB, the FPC is made of flexible insulation base materials, and can be bent and wound, thereby better satisfying a design requirement for the foldable electronic device. In addition, the FPC further helps reduce a size of the device, reduce costs, and improve production efficiency.

It should be noted that the FPC may include a surface layer, an intermediate layer, and a reference ground plane. The intermediate layer is located between the surface layer and the reference ground plane, and the cross-hinge signal lines may be arranged in the surface layer or the intermediate layer.

It should be further noted that, in this embodiment of this application, a high-speed signal line may be used as the cross-hinge signal line, the cross-hinge signal line is designed based on differential line impedance of 100 Ω, and an impedance error is controlled to be within ±10%.

In addition, a width of the cross-hinge signal line is selected accordingly (the wiring width of the cross-hinge signal line is shown in shadow parts in FIG. 8a and FIG. 8b) depending on different FPC design structures and different materials to be selected. According to an industry standard, the width of the cross-hinge signal line is generally selected from a range of 1.0 mm to 2.0 mm.

In addition, a C-PHY 3-lane design or a D-PHY 4-lane design may be employed for the layout of the cross-hinge signal lines on the FPC.

The FPC in this embodiment is narrower than a conventional cross-hinge circuit, and does not occupy space of the hinge mechanical structure, thereby improving reliability of the hinge structure and reducing difficulty in designing the hinge.

In a possible implementation, as shown in FIG. 8a, the foldable electronic device further includes board-to-board BTB connectors that are disposed corresponding to the first switch assembly 401.

The foldable electronic device further includes board-to-board BTB connectors that are disposed corresponding to the first switch assembly 402 and the second switch assembly 701.

It should be noted that the BTB connectors are configured to connect to the FPC, and the BTB connectors are connected to adapter cards of different types of backplanes or interfaces to implement communication and data transmission between different modules or plug-in cards.

It may be understood that the BTB connector needs to be fastened for connecting each cross-hinge signal line to the FPC. Therefore, a quantity of BTB connectors may also be reduced by reducing the quantity of cross-hinge signal lines.

It is clear that a person skilled in the art may make various modifications and variations to this application without departing from the scope of this application. This application is intended to cover the modifications and variations of this application provided that these modifications and variations fall within the scope of protection defined by the claims of this application and their equivalent technologies.

## Claims

1. A foldable electronic device, wherein the foldable electronic device comprises a main board, a sub-board, a processor, a first switch assembly, a first signal line, a first module, and a second module, the main board is connected to the sub-board through a hinge, the first module and the second module operate in a mutually exclusive manner, the processor is located on the main board, and the first module and the second module are located on the sub-board;
the first switch assembly is connected between the processor and the first module through the first signal line to form a first branch, the first switch assembly is connected between the processor and the second module through the first signal line to form a second branch, and the first signal line is located in the hinge; and
the first switch assembly is configured to conduct the first branch or the second branch.

2. The foldable electronic device according to claim 1, wherein the first module is a first image capture module, the second module is a first display module, and the first image capture module and the first display module are respectively used for different types of screens of the foldable electronic device.

3. The foldable electronic device according to claim 2, wherein types of the screens of the foldable electronic device comprise an external screen and an internal screen.

4. The foldable electronic device according to claim 2 or 3, wherein the first switch assembly comprises a first switch and a second switch, the first switch is located on the main board, and the second switch is located on the sub-board;
a first switching end of the first switch is connected to a first image capture serial interface of the processor, a wiring end of the first switch is connected to a wiring end of the second switch through the first signal line, and a first switching end of the second switch is connected to the first image capture module, to form the first branch; and
a second switching end of the first switch is connected to a first display serial interface of the processor, the wiring end of the first switch is connected to the wiring end of the second switch through the first signal line, and a second switching end of the second switch is connected to the first display module, to form the second branch.

5. The foldable electronic device according to claim 3 or 4, wherein the foldable electronic device further comprises a second image capture module, and the first image capture module and the second image capture module are respectively used for different types of screens of the foldable electronic device; and
the second image capture module is located on the main board, and the second image capture module is connected to the processor.

6. The foldable electronic device according to any one of claims 2 to 4, wherein the foldable electronic device further comprises a second switch assembly, a second signal line, a second image capture module, and a second display module, the first image capture module and the second image capture module are respectively used for different types of screens of the foldable electronic device, the first display module and the second display module are respectively used for different types of screens of the foldable electronic device, and the second image capture module and the second display module are located on the sub-board;
the second switch assembly is connected between the processor and the second image capture module through the second signal line to form a third branch, and the second switch assembly is connected between the processor and the second display module through the second signal line to form a fourth branch; and
the second switch assembly is configured to conduct the third branch or the fourth branch.

7. The foldable electronic device according to claim 6, wherein the second switch assembly comprises a third switch and a fourth switch, the third switch is located on the main board, and the fourth switch is located on the sub-board;
a first switching end of the third switch is connected to a second image capture serial interface of the processor, a wiring end of the third switch is connected to a wiring end of the fourth switch through the second signal line, and a first switching end of the fourth switch is connected to the second image capture module, to form the third branch; and
a second switching end of the third switch is connected to a second display serial interface of the processor, the wiring end of the third switch is connected to the wiring end of the fourth switch through the second signal line, and a second switching end of the fourth switch is connected to the second display module, to form the fourth branch.

8. The foldable electronic device according to claim 6 or 7, wherein the foldable electronic device further comprises a flexible printed circuit board FPC, the FPC is connected between the main board and the sub-board, and the FPC is configured for arrangement of the first signal line and the second signal line.

9. The foldable electronic device according to claim 8, wherein the foldable electronic device further comprises board-to-board BTB connectors that are disposed corresponding to the first switch assembly and the second switch assembly, and the BTB connectors are configured to connect to the FPC.
